# EUROPEAN PATENT APPLICATION

(11) **EP 1 903 822 A2**
(43) Date of publication of application: **26.03.2008**
(21) Application number: 07018639.0
(22) Date of filing: 21.09.2007
(51) Int. Cl.: H04Q 7/38

(54) **Method of handling radio link failure in wireless communications system and related device**

(30) Priority: 21.09.2006 US 846102 P
(71) Applicant: Innovative Sonic Limited, Tortola (VG)
(72) Inventor: Jen, Yu-Chih, Peitou, Taipei City Taiwan (TW)
(74) Representative: Schaeberle, Steffen

(57) **Abstract**

A method of handling radio link failure for a packet switching domain in a wireless communications system includes a user equipment utilizing at least one timer, at least one parameter and at least one variable, or at least one timer at least one parameter and at least one variable, for performing a re-establishment procedure when a radio connection is lost (302).

## Description

This application claims the benefit of U.S. Provisional Application No. 60/846,102, filed on September 21, 2006 and entitled "Method and Apparatus for Handling Radio Link Failure in Wireless Communications System," the contents of which are incorporated herein by reference.

The present invention relates to a method of handling radio link failure in wireless communications systems and related devices according to the pre-characterizing clauses of claims 1 and 19.

In a wireless communications system, radio link failure (RLF) between user equipment (UE) and UTRAN can occur due to all kinds of impairments in a wireless environment, unfavorable signal propagation conditions, or even system malfunctions. For some applications, upon RLF, a user may notice immediately if there is unexpected delay or discontinuity in the radio bearer over which the service is provided. Mechanisms, including a cell update procedure, used to detect and/or handle the failures require parameters and timers to trigger each step of a normal procedure, or to make decisions for linking to other procedures. With the mechanism, re-establishments of lost radio connections will be managed, so that the incident is likely to be unnoticed by the user, or at least can be recovered from as soon as possible.

The timers and parameters in the UE, e.g. T313, T314/T315, N302, N315, N313, T302, or T307, are obtained from a system information block, and some are used with counters, e.g. V302, for handling related circumstances, respectively. For example, T314 and T315, acting as re-establishment timers when re-establishments of lost connections are still allowed, are simply used to determine when to go to IDLE mode after reconnection attempts from the decisions of cell update and reselection, where T314 and T315 are typically used in circuit switching and packet switching domain, respectively. T314 and T315 values used in NBs are configured by RNC and are usually larger than those used in UEs. In contrast, in the case of 3GPP LTE, it is assumed that only the packet switching domain will be utilized, and it is expected that there will be more applications for mobile devices. The provision of similar mechanisms for RLF in LTE remains to be well defined.

Forward handover is used in UMTS to recover the loss of a radio link, or a failed reconfiguration procedure. A UE can initiate a cell update procedure with the target Node B when a regular handover fails and when the UE is not able to go back to the source Node B. In LTE, efficient performance of forward handover is expected and a related forwarding feature can be further exploited to enhance the radio link connection and service continuity.

In UMTS, there is a timer in a domain used to decide when to enter the IDLE mode upon the detection of RLF. Based on the assumption that an RLF in LTE_ACTIVE (RRC_CONNECTED) state is most comparable with an RLF in CELL_DCH in UMTS, it is suggested that only one timer (T315 for PS domain) will be needed to decide when to enter LTE_IDLE (RRC_IDLE), since there will be only one domain in LTE.

In the prior art, it remains unclear how many timers are used to determine when to go to IDLE and how each timer value is configured in LTE. It is understood that there will be only one domain (PS) in LTE. However, one domain does not mean that just one timer is needed. For, when two timers, working independently, were introduced in UMTS for two domains, the characteristics of provided application services, e.g. real time or non-real time, were also considered to set the configuration values. In LTE, employed services and new applications will have various QoS requirements and different sensitivities to the endurable duration of radio link failure, e.g. out of synchronization.

In addition, based on the consideration of potential UE capability, e.g. dual receiver or multiple receiver, it is possible that the UE will maintain more than one radio link in different frequency layers or monitor different frequency bands, where different services and applications may applied, Therefore, it is possible that radio link failure will happen in one frequency layer, and the other frequency layer (or other frequency layers in case of multiple receiver) will maintain good radio link condition. Similarly, it is also possible that one service-providing entity will encounter a malfunction, but the other will provide stable services. Even with one receiver, different services may require different timers. Therefore, there is no reason to maintain only one timer that may limit the efficiency of UE capability and be unfair to different service requirements.

On the other hand, the values of timers are configured in the RNC in UMTS. However, LTE removes the RNC, so that it is unclear which entity should decide the configuration values of the timers. It is known that characteristics of SAE bearer services will be decided at the gateway level (aGW). In addition, a functional entity at the gateway level also knows about network configuration and signaling and user plan load. Yet, the functional entity at the NodeB level (eNB) might respond and reflect the transmission status more quickly.

Further, in UMTS, T313 (based on N313) and N313 (maximum number of successive out of sync indications received from L1) are used to detect the radio link failure. In addition, T302, N302 and V302 are used for a cell update/LTRA update procedure, where V302 is a counter/variable instead of a timer/parameter. It is set by UE instead of being received from SIB.

Similar to the problem of the prior art mentioned above, it remains unclear how many timers and parameters are used to detect or handle the radio link failure, and how those values are configured in LTE. In addition, there might be several mobility and QoS levels for one single application. For example, from the same gaming/MBMS service provider (server), a provided gaming application running on a UE could be real time or non-real time with mobility levels of none, low, medium or high. Consequently, an application might require a cell update procedure (or a random access procedure in LTE performs the similar functions) more frequent sometimes, but not require the cell update procedure (or same-functional procedure) as frequently at other times. On the other hand, for some applications, the time of detection of radio link failure might be more critical than others.

Thus, it seems desirable that the timers and parameters in UE and eNB in LTE be updateable or reconfigurable, without the need for bearer re-establishment. This is based on the assumption that values of timer(s) and parameter(s) for RLF recovery by initiating the cell update procedure or same-functional procedure (e.g. random access procedure) are received during SAE bearer establishment.

For all of the above discussion, mapping from LTE_IDLE to RRC_IDLE and from LTE_ACTIVE to RRC_CONNECTED are assumed. Cell update procedure in LTE in the context only represents a procedure performing re-establishment or location update in functional and conceptual point of view.

This in mind, the present invention aims at providing a method and apparatus for handling radio link failure in a packet switching domain of a wireless communications system, so as to use at least one timer, at least one parameter and at least one variable, or at least one timer at least one parameter and at least one variable for handling radio link failure in a wireless communications system.

This is achieved by a method and apparatus for handling radio link failure in a packet switching domain of a wireless communications system according to the pre-characterizing clauses of claims 1 and 19. The dependent claims pertain to corresponding further developments and improvements.

As will be seen more clearly from the detailed description following below, a method of handling radio link failure for a packet switching domain in a wireless communications system comprises a user equipment utilizing at least one timer, at least one parameter and at least one variable, or at least one timer at least one parameter and at least one variable, for determining whether to perform the re-establishment procedure, or for performing a re-establishment procedure when a radio connection is lost.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart of handling radio link failure according to a preferred embodiment of the present invention.

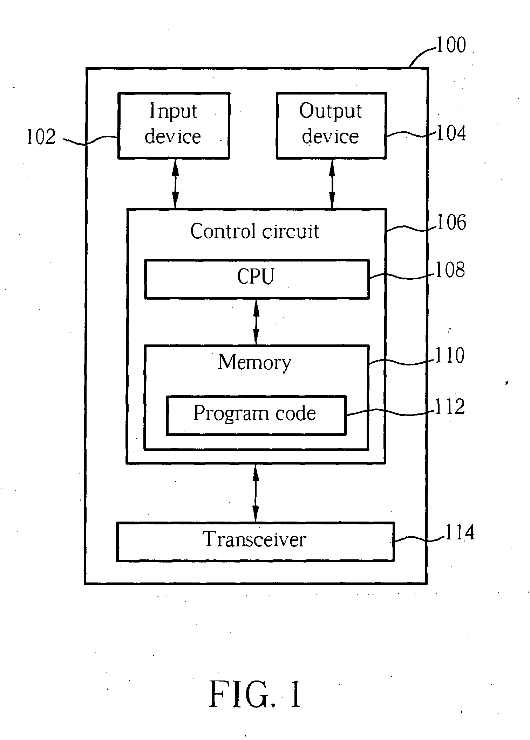

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100.

In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3 or even higher layers. Preferably, the communications device 100 is utilized in an LTE/SAE mobile communications system.

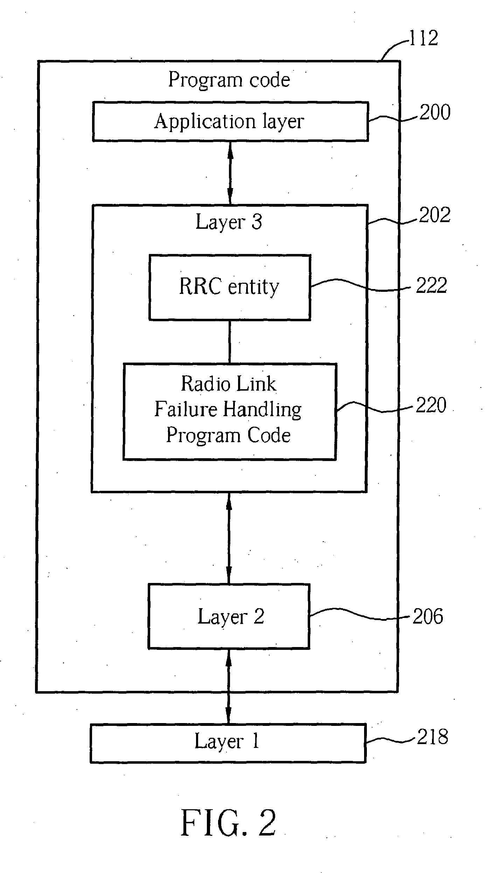

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1218 and the Layer 2 206 and performing peer-to-peer RRC communication with other communications devices, such as a base station or a Node-B-like entity. In addition, the RRC entity 222 can change an RRC state of the communications device 100, switching between an idle mode, a detached state, and an active state. The program code 112 further comprises a radio link failure handling program code 220, which is used for handling radio link failure.

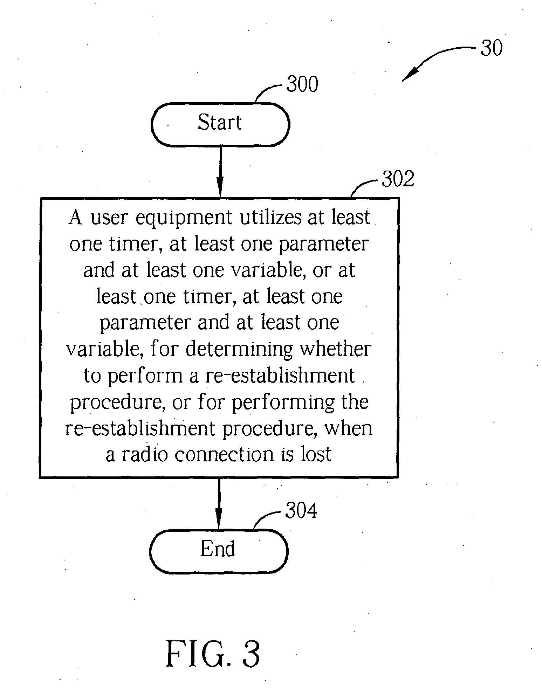

Please refer to Fig. 3, which is a flowchart of a process 30 for detecting radio link failure according to a preferred embodiment and a second embodiment of the present invention. The process 30 is used to handle radio link failure in a communications device, such as the radio link failure handling program code 220 in the communications device 100 described above, in a wireless communications system, such as an LTE/SAE wireless communications system, and comprises the following steps:
Step 300: Start.
Step 302: A user equipment utilizes at least one timer, at least one parameter and at least one variable, or at least one timer, at least one parameter and at least one variable, for determining whether to perform a re-establishment procedure, or for-performing the re-establishment procedure, when a radio connection is lost.
Step 304: End.

For performing the re-establishment procedure after detection of radio link failure, the UE can utilize at least one timer, at least one parameter and at least one variable, or at least one timer and at least one parameter and at least one variable, either for determining whether to perform the re-establishment procedure, or for performing the re-establishment procedure. Regardless of determining whether to perform the re-establishment procedure (mechanism outside the procedure) or actually performing the re-establishment procedure (mechanism inside the procedure), utilization of at least one timer, at least one parameter and at least one variable, or at least one timer and at least one parameter and at least one variable, corresponds to a period of time having been consumed. At least one parameter and at least one variable can be used to count the number of re-establishment attempts (mechanism outside the procedure) or the number of re-establishment accesses (mechanism inside the procedure). The period of time having been consumed can be useful for the consideration on when to enter an IDLE state, when to stop or give up the re-establishment (to source cell or new cell), or when to release radio resources.

The values of the at least one timer and parameter can be configured or reconfigured by a functional entity or a decision from a set of functional entities. The values of the timers and/or parameters for the said UE can be obtained in system information blocks sent from the eNB or in the control information from higher layer in the said UE. The values of timers and/or parameters for services can be suggested, or be negotiated, by a functional entity in the user equipment or a network service provider. Each timer and/or each parameter and/or each counter/variable is not restricted to certain classes of services if not configured. The counters/variables are set by the UE, and used along with the said timers and parameters of the re-establishment or location update procedures. The re-establishment of lost connections is allowed before corresponding timers are pre-terminated or expire and/or corresponding counters/variables are equal to or reach the configured or reconfigured value of the corresponding parameters. When the timers are pre-terminated or expire and/or the counters/variables are equal to or reach the configured or reconfigured number of confirmations of radio link status, e.g. no response of re-establishment or location update or confirmation of re-establishment or location update reception, or the configured or reconfigured value of the parameters, e.g. the maximum number of re-establishment or location update procedures performed or the required number of successful re-establishments, or if all Radio Bearers, associated with the timers and/or parameters, or sets of timers and/or parameters, used, are released or will be released, Radio link failure or radio link re-establishment is indicated or detected as the cause for the UE to enter idle mode or to remain in active mode, respectively. The values of the timers and/or the parameters can be determined based on Layer 1 characteristics and/or network statistics. The values of the timers and/or the parameters can be predefined and stored in the said entity or entities. The functional entity can be the mobility management entity in aGW, or the scheduler and/or RB control entity and/or Mobility Management entity in the eNB. The set of functional entities are included in NAS in aGW or control plane in the eNB. The configured and/or reconfigured values of the timers and/or the parameters are based on any combination of statistics, status of radio link or transmission, service configuration, network configuration, system load, and Layer 1 characteristics.

The reconfiguration procedure to update timers and/or parameters shall be a normal re-establishment, reconfiguration, bearer setup, or location update procedure. The reconfiguration procedure can also be triggered by the received suggestion message. The system information blocks can be dedicated to the UE or a group of UEs. Whether the suggestion originates from the UE or the network service provider is based on if the service is a UE-initiated QoS service or a Network-initiated QoS service.

Each timer of the multiple timers and/or each parameter can be applied to a same class of services or different classes of services, depending on the configuration. In other words, for example, two timers and two parameters or two sets of parameters can be used for the same category of services or two or more different categories of services. When the timer expires or is pre-terminated, one trial of the re-establishment procedure is terminated and counted in the counter/variable. Separate re-establishment through corresponding separate re-establishment procedures can be performed if dual receivers are implemented at the UE. If the number of trials of the cell update procedure, e.g. the number of times the re-establishment or location update message is transmitted, associated with the timers and/or the parameters and/or the counters/variables, reaches its maximum allowed number and/or cannot enter or re-enter a service area, the corresponding RBs associated with the same category of the timers and/or the parameters and/or the counters/variables are released. The values can be set to ensure that the probability of missing confirmation of re-establishment or location update is low, e.g. 1%, and/or the re-establishment or location update procedure is efficient. The counter/variable is incremented by one. If the counter/variable does not reach the configured value of the parameter and/or the re-establishment timers do not expire or is not pre-terminated, the re-establishment procedure can restart, e.g. re-send the re-establishment message. The one trial of the re-establishment or location update procedure can represent that each transmitting re-establishment or location update message has been sent. When timers used to detect radio link failure, are still running, the user equipment waits for the response to the messages. The message can make use of implicit signaling or a control message block.

## Claims

1. A method of handling radio link failure for a packet switching domain in a wireless communications system, the method comprising:
a user equipment establishing wireless communication; and
the user equipment utilizing at least one timer, at least one parameter and at least one variable, or at least one timer at least one parameter and at least one variable, for determining whether to perform a re-establishment procedure, or for performing the re-establishment procedure, when a radio connection is lost (302).

2. The method of claim 1, wherein values of the at least one timer and the at least one parameter are configured or reconfigured by a functional entity, or a set of functional entities.

3. The method of claim 1, wherein values of the at least one timer and the at least one parameter are obtained by a first entity in at least one system information block sent from a second entity, or from a higher layer in the first entity.

4. The method of claim 1, wherein value of the at least one timer and the at least one parameter for services are suggested by a functional entity in a user equipment or a functional entity at network.

5. The method of claim 1, further comprising the user equipment setting the at least one variable, and using the at least one variable along with the at least one timer and the at least one parameter for the re-establishment procedure.

6. The method of claim 1, wherein re-establishment of a lost connection through a re-establishment procedure is allowed before the at least one timer expires or is pre-terminated, or before the at least one variable is equal to the value of the at least one parameter.

7. The method of claim 1, further comprising indicating or detecting radio link failure as the cause for the user equipment to enter an idle state when the at least one timer is pre-terminated or expires, when the values of the at least one variable are equal to the values of the at least one parameter, or when the at least one variable is equal to a number of confirmations of radio link status.

8. The method of claim 1, further comprising indicating or detecting radio link re-establishment as the cause for the user equipment to remain in an active state, when the at least one variable is equal to a number of confirmations of radio link status, when the values of the at least one variable are equal to the values of the at least one parameter, or if associated radio bearers are re-established.

9. The method of claim 2, wherein the functional entity is a mobility management entity in an access gateway, or a scheduler, a radio bearer control entity, or a mobility management entity in a network entity.

10. The method of claim 2, wherein the set of functional entities is included in a non-access stratum of an access gateway or a control plane in a network entity.

11. The method of claim 2, wherein the value or values of the at least one timer and the value or values of the at least one parameter are determined based on statistics, status of the radio link, status of transmission, service configuration, network configuration, system load, or Layer 1 characteristics.

12. The method of claim 2, wherein a reconfiguration procedure for updating the at least one timer and the at least one parameter is a re-establishment, reconfiguration, bearer setup, or location update procedure.

13. The method of claim 3, wherein the at least one system information block is dedicated to at least one user equipment.

14. The method of claim 1, further comprising performing separate re-establishments through corresponding separate re-establishment procedures if dual receivers are implemented in the user equipment.

15. The method of claim 7, further comprising releasing radio bearers associated with a same category of the at least one timer, the at least one parameter, or the at least one variable if a number of trials of re-establishment procedures associated with the at least one timer, the at least one parameter, or the at least one variable reaches a maximum allowed number.

16. The method of claim 11, wherein the values are set to ensure that the probability of missing re-establishment confirmation is low, or to ensure that the re-establishment procedure is efficient.

17. The method of claim 14, further comprising:
incrementing the at least one variable by one; and
restarting the re-establishment procedure if the at least one variable does not reach the value of the at least one parameter, and the re-establishment timer does not expire or is not pre-terminated.

18. The method of claim 17, further comprising the user equipment waiting for a response corresponding to the re-establishment message when the at least one timer used to detect radio link failure is still running.

19. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
code for establishing wireless communication; and
code for utilizing at least one timer, at least one parameter and at least one variable, or at least one timer at least one parameter and at least one variable, for determining whether to perform a re-establishment procedure, or for performing a re-establishment procedure when a radio connection is lost (302).

20. The communications device (100) of claim 19, wherein values of the at least one timer and the at least one parameter are configured or reconfigured by a functional entity, or a set of functional entities.

21. The communications device (100) of claim 19, wherein values of the at least one timer and the at least one parameter are obtained by a first entity in at least one system information block sent from a second entity, or from a higher layer in the first entity.

22. The communications device (100) of claim 19, wherein value of the at least one timer and the at least one parameter for services are suggested by a functional entity in a user equipment or a functional entity at network.

23. The communications device (100) of claim 19, further comprising the user equipment setting the at least one variable, and using the at least one variable along with the at least one timer and the at least one parameter for the re-establishment procedure.

24. The communications device (100) of claim 19, wherein re-establishment of a lost connection through a re-establishment procedure is allowed before the at least one timer expires or is pre-terminated, or before the at least one variable is equal to the value of the at least one parameter.

25. The communications device (100) of claim 19, further comprising performing separate re-establishments through corresponding separate re-establishment procedures if dual receivers are implemented in the user equipment.
